# FASCICULE DE BREVET EUROPEEN

(11) **EP 3 724 376 B1**
(45) Date de publication et mention de la délivrance du brevet: **08.09.2021**
(21) Numéro de dépôt: 18833471.8
(22) Date de dépôt: 12.12.2018
(51) Int. Cl.: C25D 17/08, C09D 7/61

(54) **OUTILLAGE DE GALVANOPLASTIE**
GALVANISIERWERKZEUG
ELECTROPLATING TOOL

(30) Priorité: 13.12.2017 FR 1762035
(43) Date de publication de la demande: 21.10.2020
(73) Titulaire: Renaud, Maxence, 94440 Santeny (FR)
(72) Inventeur: Renaud, Maxence, 94440 Santeny (FR)
(74) Mandataire: Jacobacci Coralis Harle
(86) Numéro de dépôt international: PCT/FR2018/053223
(87) Numéro de publication internationale: WO 2019/115938

(56) Documents cités:
- EP-A1- 1 496 090
- WO-A1-2005/082990
- WO-A2-2014/105466

## Description

La présente invention concerne le domaine des revêtements plastiques, plus particulièrement le domaine des plastisols et leur application à la protection des supports destinés à être placés dans des conditions de corrosion chimique très sévères.

L'invention concerne plus précisément un nouveau plastisol particulièrement approprié pour le revêtement de montages d'électrolyse appelés à tremper dans des bains destinés à la galvanoplastie.

L'invention a plus spécifiquement pour objet un plastisol pour revêtement de montages d'électrolyse pour la métallisation de substrats plastiques.

On rappellera qu'est couramment dénommé plastisol un mélange formé d'au moins une suspension de résine, par exemple poly(chlorure de vinyle) (PVC) en poudre préparée suivant le procédé de polymérisation en émulsion (ou en micro suspension), dans un plastifiant liquide, et d'adjuvants, de type stabilisants, charges, pigments, et agents gonflants.

Sous l'action de la chaleur, ce plastisol se transforme en un solide homogène, vers des températures de l'ordre de 180°C.

Les plastisols sont utilisés dans des domaines très différents mais ils ont trouvé notamment une application particulière dans le domaine des revêtements de montages d'électrolyse appelés à tremper dans des bains sulfochromiques, chlorhydriques, de nickelage, de cuivrage, destinés à la galvanoplastie.

La galvanoplastie est une technique qui consiste entre autres à recouvrir par voie chimique un substrat non-conducteur avec un mince film ou revêtement conducteur puis à déposer par voie électrolytique un revêtement métallique sur le film déposé chimiquement. La galvanoplastie permet de recouvrir des substrats non conducteurs par des métaux tels que le cuivre, le nickel, le chrome, l'or, l'argent ou similaires.

Le dépôt d'un film métallique par voie chimique sur un substrat non conducteur comprend la succession d'étapes suivantes :
1. Le satinage chimique qui consiste à tremper le substrat non conducteur, une matière plastique par exemple, dans un bain de satinage destiné à former des pores ou alvéoles submicroniques, de l'ordre du dixième de micron à la surface du substrat.
2. Le trempage du substrat ayant subi un satinage chimique dans une solution de neutralisation, ayant pour objet d'éliminer les traces de réactifs du bain de satinage sur le substrat, et en particulier les traces de chrome sur le substrat lors d'une étape de satinage dans un bain sulfochromique.
3. Le pré-trempage du substrat neutralisé dans une solution de HCl, cette étape ayant pour objet d'assurer la protection du catalyseur, typiquement du palladium colloïdal, lors de l'étape suivante.
4. La catalysation de la surface du substrat dans un bain de catalyseur colloïdal. Ce bain est réalisé autour d'un état d'équilibre entre le palladium et l'étain en milieu hydrochlorhydrique. Les alvéoles (ou pores) à la surface du substrat, rendues hydrophiles et débarrassées de chrome par étapes de neutralisation vont absorber l'étain sous forme de SnO et Sn et provoquer la précipitation du palladium.
5. L'accélération de catalyse qui consiste en une élimination des ions Sn⁴⁺ de la surface du substrat et la réduction du palladium sous forme catalytique Pd.
6. Le dépôt chimique d'un film métallique, typiquement Ni ou Cu. Ce type de dépôt chimique d'un film métallique sur un substrat en matière plastique est bien connu de l'homme de l'art.

Une étape classique de nettoyage de la surface des substrats par des tensioactifs adaptés peut précéder l'ensemble des étapes décrites ci-dessus.

Un premier type de bain de satinage comprend les mélanges à base d'anhydride chromique. Il s'agit par exemple des satinages d'anhydride chromique et d'acide sulfurique, des satinages d'anhydride chromique et d'eau, et des satinages à base d'anhydride chromique, d'acide sulfurique et d'acide ortho-phosphorique.

Cependant, si les plastisols connus, appelés à revêtir les outillages de galvanoplastie, comme les montages d'électrolyse, sont généralement satisfaisants, ils ont tendance à se recouvrir eux-mêmes de métal lors des étapes de métallisation chimique.

Les outillages de galvanoplastie, recouverts de plastisol, doivent pouvoir être utilisés plusieurs fois, afin de réaliser plusieurs cycles de galvanoplastie, il existe donc un besoin dans l'état de la technique pour des plastisols qui ne soient pas altérés par un dépôt de métal à la fin de chaque cycle de métallisation chimique.

De plus, on a remarqué que le phénomène de métallisation du plastisol était encore plus marqué, lorsque, lors de l'étape de satinage, la concentration en composés de chrome, notamment les oxydes de chrome, et tout particulièrement de chrome (VI) dans le mélange sulfochromique utilisée dans les bains de satinage diminuait.

Or, la nécessité de diminuer la concentration en composés de chrome VI, notamment en CrO₃ dans le mélange sulfochromique (mélange d'acide sulfurique et d'anhydride chromique) des bains de satinage correspond à une contrainte justifiée notamment par l'apparition de nouvelles normes anti-pollution, dont on peut citer à titre d'exemple la directive européenne SEVESO 2.

Cette contrainte a accentué le besoin pour des plastisols capables de ne pas se recouvrir de métal lors du dépôt chimique de métal, même lorsque la concentration en CrO₃ dans le mélange sulfochromique utilisée est faible.

Le brevet EP-1.496.090 au nom de la société SERME décrit un plastisol destiné à protéger un outillage de galvanoplastie contre la métallisation, comprenant au moins une résine et un mélange plastifiant et un additif contenant au moins un sel métallique limitant voire empêchant la métallisation dudit plastisol, typiquement un chromomolybdate de plomb.

Un tel plastisol convient particulièrement lorsqu'on utilise des bains de satinage comprenant moins de 500g/L d'anhydride chromique dans le mélange sulfochromique, de préférence moins de 100g/L et idéalement 50g/L ou moins.

On a également développé des bains de satinage totalement exempts de chrome. Ainsi, on connaît des bains de satinage à base de permanganate et d'hydroxyde de sodium, à base de mélanges d'acides sulfurique, phosphorique, acétique ou p-toluène-sulfonique, à base d'hydroxyde de sodium ou potassium.

Ainsi, la demande de brevet US-2005/0199587A1 décrit un bain de satinage à base de permanganate.

Il a été récemment mis au point des compositions de satinage exemptes de composés de chrome, notamment de chrome (VI), comprenant des ions de manganèse Mn(VII) ou des ions de manganèse Mn(II) et/ou Mn(III). De telles compositions sont décrites dans la demande de brevet US-2011/0140035, le brevet US-8.603.352 et le brevet EP-2.792.702B1.

Un bain de satinage à base d'ions manganèse est commercialisé par la société DOW Chemical Company sous la dénomination ECOPOSIT® CF-820 (Chrome-free Etch-CFE).

Malheureusement, les plastisols connus, y compris les plastisols décrits dans le brevet EP-1.496.090, ont une forte tendance à se métalliser lors de l'utilisation de ces bains de satinage exempts de chrome.

Pour éviter la métallisation du plastisol, la demande internationale WO-2013/182590 propose d'utiliser comme solution de satinage une solution de chlorate dans l'acide sulfurique. Une telle solution a pour inconvénients d'être exclusive de l'emploi d'autres solutions de satinage, notamment d'autres solutions exemptes d'ions chrome du commerce.

Pour éviter la métallisation du plastisol lors de l'utilisation de bains de satinage à base d'ions manganèse ou de permanganate, la demande de brevet US-2015/0233011 propose un traitement préalable de l'outillage dans une solution contenant un inhibiteur de métallisation choisi parmi les sels des métaux de transition de dithiocarbamates di-substitués et de sulfures de thiurame tétra-substitués.

Cette approche a pour inconvénient d'introduire une étape supplémentaire dans le processus de métallisation et l'emploi de matériel additionnel, notamment d'une cuve de traitement supplémentaire.

Pour éviter la métallisation du plastisol, la demande de brevet US-2016/0040315 propose d'introduire dans la composition du plastisol revêtant l'outillage un additif organique comportant des fonctions amines et sulfures, notamment des disulfures de thiurame tétra-substitués et des dithiocarbonates métalliques.

Pour éviter la métallisation du plastisol, la demande de brevet US-2016/0102403 prévoit une étape d'application sur le plastisol de composés sulfurés, notamment des disulfures organiques. Cette solution a pour inconvénient d'introduire une étape supplémentaire dans le procédé de métallisation.

La présente invention a donc pour objet un outillage, notamment un porte-objets, pour galvanoplastie revêtu d'un plastisol qui ne se métallise pas après un traitement de satinage avec un bain de satinage exempt de chrome, notamment un bain de satinage à base d'ions manganèse ou de permanganate.

En particulier, l'outillage selon l'invention ne nécessite pas d'étape de traitement supplémentaire visant à éviter sa métallisation.

Les buts ci-dessus sont atteints selon l'invention en utilisant un plastisol comprenant au moins un oxyde de bismuth et d'un élément du groupe V ou du groupe VI de la classification périodique des éléments (dénommé ci-après « oxyde mixte de bismuth »). De préférence, l'oxyde mixte de bismuth est un oxyde mixte de bismuth (III) et tout particulièrement du vanadate de bismuth (BiVO₄).

Les plastisols utilisés peuvent être tout plastisol classique, et en particulier ceux comprenant au moins une résine de poly(chlorure de vinyle) telles que des résines homopolymères ou copolymères poly(chlorure de vinyle/acétate de vinyle) ou encore une résine acrylique. Les plastisols préférés comprennent une ou plusieurs résines de poly(chlorure de vinyle) (PVC).

Le plastifiant est choisi parmi les phtalates de dibutyle, les phtalates mixtes de benzyle-butyle, les phtalates de di(2-éthylhexyle), les phtalates de dihexyle, les phtalates de diisononyle et leurs mélanges. Un mélange de plastifiants particulier, convenant à la réalisation d'un plastisol selon l'invention est un mélange de diisononylphtalate, d'adipate de diisononylphtalate et de triméthyl pentanediol diisobutyrate.

L'oxyde mixte de bismuth est choisi parmi les vanadates, molybdates, tungstates, niobates et antimonates de bismuth, en particulier les vanadates de bismuth, et leurs mélanges.

L'oxyde mixte de bismuth préféré est le vanadate de bismuth BiVO₄, celui-ci est commercialisé entre autres sous la dénomination BRUFASOL® AL 2300 par la société Bruchsaler Farbenfabrik GmbH & Co. KG.

Cet oxyde est dispersé au sein du plastisol lors de sa fabrication et notamment lors d'une étape d'empâtage sous vide du plastisol ou lors d'une étape de dispersion des poudres dans le plastifiant.

La concentration en oxyde mixte de bismuth dans le plastisol exprimée en parties pour cent en poids de résine (pcr) est de 2,5 à 7,5 et de préférence de 4 à 6.

Un plastisol préféré selon l'invention répond à la composition suivante, exprimée en parties en poids de résine (pcr) est de:

| | |
|---|---|
| Résine | 100 |
| Oxyde mixte de bismuth | 2,5 à 7,5 |
| Plastifiant | 45 à 60. |

Un plastisol selon l'invention peut comprendre en outre, un ou plusieurs adjuvants choisis parmi les stabilisants, les agents de charge, les colorants, les agents gonflants, les émulsifiants, les agents d'ajustage de la viscosité, les agents de démoulage, les agents matants, les agents antistatiques, les agents antioxydants, les agents fongicides, les agents de dégazage, les stabilisants thermiques, les agents améliorant la tenue au feu, les mélanges de ceux-ci, et plus généralement des mélanges thixotropiants facilitant l'application des plastisols sur les supports destinés à être revêtus par trempage.

En plus des résines PVC, des résines d'addition telles que des styrène-acrylonitriles (SAN), des acrylonitrile-butadiène-styrènes (ABS), des caoutchoucs butyl synthétiques (SBR), ou des polyéthylènes chlorés (CPE) peuvent être incorporées dans les plastisols selon la présente invention.

Le plastisol peut également être de type « haute température ».

En dosant le pourcentage de plastifiants par rapport aux résines PVC, on obtient plusieurs types de plastisols qui conviennent à la réalisation de l'invention. Une première catégorie comprend les plastisols dits « mous » qui possèdent une dureté après cuisson comprise entre 60 et 70 Shore A. Une deuxième catégorie comprend les plastisols dits « durs » qui possèdent une dureté après cuisson comprise entre 80 et 90 Shore A.

Par ailleurs, les plastisols convenant pour l'invention présentent généralement une dureté Shore A comprise entre 80 et 90.

En ce qui concerne le mode détaillé de fabrication des plastisols selon l'invention et leurs applications, l'homme du métier pourra se référer utilement à l'ouvrage suivant : Techniques de l'ingénieur, volume A9, pages 3710 et suivantes, au chapitre « plastisol et mise en œuvre » par R. ARLOTTO.

Par « outillage de galvanoplastie », l'homme du métier comprendra les montages d'électrolyse, les montages destinés à maintenir dans les bains de d'électrolyse, les pièces que l'on désire revêtir d'un métal et, de manière générale, tous les éléments à protéger des bains d'électrolyse.

Un plastisol selon l'invention peut être composite et comprendre au moins deux couches de plastisol ; une première couche interne en contact avec l'outillage de galvanoplastie, et une couche externe recouvrant la couche interne. Dans ce cas, l'additif est dispersé préférentiellement dans la deuxième couche, externe. Un plastisol composite est décrit notamment dans la demande de brevet EP-0.607.717 et comprend une première couche de plastisol standard comprenant 70% de plastifiant et une seconde couche de plastisol « dur » contenant 35 à 40% de plastifiant. Grâce à un tel revêtement, la couche supérieure de plastisol « dur », pauvre en mélange plastifiant, est régénérée par la couche inférieure, riche en mélange plastifiant. La couche supérieure de plastisol, au sein de laquelle l'oxyde de bismuth est préférentiellement dispersé, peut répondre à la composition décrite dans le brevet FR-2.456.131 déposé par la société SERME.

Alternativement, un plastisol composite peut comprendre trois couches de plastisol comme cela est décrit dans la demande de brevet EP-0.607.717. Un plastisol composite peut comprendre deux premières couches de plastisols identiques à celles décrites ci-dessus, et une troisième couche de plastisol, classique, de type mou recouvrant les deux couches précédentes.

L'invention concerne en particulier un outillage de galvanoplastie revêtu d'un plastisol selon l'invention, et en particulier revêtu d'un plastisol composite tel que défini ci-dessus.

Parmi les substrats destinés à être métallisés, on peut citer en premier lieu les ABS. Parmi tous les ABS disponibles, les grades d'ABS spécifiques « spécial chromage », sont particulièrement préférés. Ils sont spécialement formulés et possèdent un ratio copolymères-nitrile-styrène et butadiène optimal.

Parmi les substrats destinés à être métallisés, on peut citer aussi les polyamides, et en particulier les PA6 ; PA6,6 ; PA4,6 ; PA6,10 ; PA6,12 ; PA11 ; PA12, le Minion IIC-40® de la société Dupont de Nemours, et les polyamides semi-aromatiques de la société EMS, de grades spécifiques développés pour le chromage.

D'autres substrats sont métallisables comme les polyoxyméthylènes (POM) ou encore les polyacétals, sous forme homopolymère et copolymère, les alliages ABS/polycarbonate et en particulier les alliages comprenant 45% de polycarbonate et 55% d'ABS, les polypropylènes et en particulier le grade chromable HV4 4019G® de la société Codiplast (RTP France), les polyphénylène-oxydes (PPO) tels que le Noryl® de la société General Electric Company.

Le revêtement des outillages de galvanoplastie par le plastisol selon l'invention peut être réalisé suivant une technique de trempage connue de l'homme du métier, décrite dans le brevet FR-2.456.131 et décrite brièvement ci-après.

Tout d'abord, les supports à recouvrir sont dégraissés par les produits organiques connus en soi, puis ils sont rincés et séchés. Ensuite, ces supports sont revêtus par une sous-couche d'adhérence également connue en soi. Le support subit ensuite un préchauffage à une température de l'ordre de 180°C à 220°C suivant les dimensions de celui-ci, puis on procède au trempage dans le bain de plastisol, et on remonte le support à une vitesse de l'ordre de 1 cm/min pour éviter la formation de coulures sur celui-ci. Le support revêtu ainsi obtenu subit ensuite une cuisson à une température de l'ordre de 160 à 200°C, de préférence de l'ordre de 190°C environ, pendant approximativement une demi-heure à 45 min suivant les épaisseurs.

Cependant, il est tout à fait envisageable de mettre en œuvre un procédé de revêtement des outillages de galvanoplastie dont les caractéristiques comme la cuisson du plastisol ou la température du support à revêtir sont différentes de celles décrites ci-dessus.

Alternativement, le revêtement des supports par le plastisol selon l'invention pourra être réalisé en déposant deux couches de plastisol ou plus, comme cela est décrit dans le brevet EP-0.607.717.

D'autres avantages apparaîtront à la lumière des exemples suivants et des figures représentant respectivement :

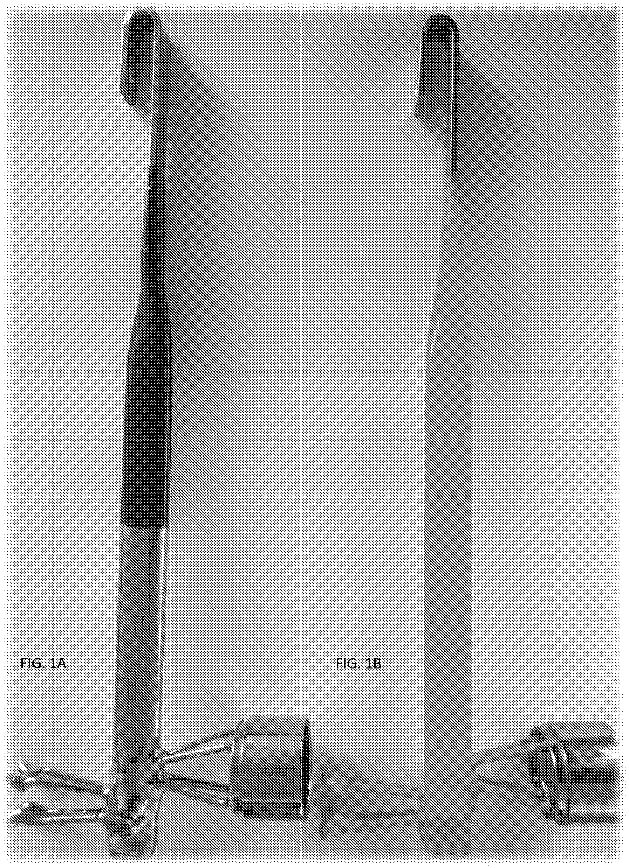

Figure 1A : Une photographie d'un outillage de galvanoplastie revêtu d'un plastisol selon le brevet EP-1.496.090 de l'art antérieur, et d'un objet, après traitement dans un bain de satinage et métallisation.
Figure 1B : Une photographie d'un outillage de galvanoplastie revêtu d'un plastisol selon l'invention, et d'un objet, après traitement dans un bain de satinage et métallisation ;

On va maintenant décrire un exemple de mise en œuvre de l'invention où les produits mis en œuvre sont explicités :

### A : Bain de satinage

Le bain de satinage utilisé est par exemple le produit commercialisé par DOW Chemical Company sous la dénomination ECOPOSIT™ CF-820 (Chrome-free Etch-CFE). D'autres types de bains de satinage sont toutefois utilisables comme par exemple les bains MC DERMID, les bains COVENTYA, les bains ENTHONE ou ATOTECH et tout autre bain de satinage adapté.

En particulier, le bain de satinage peut être un bain de satinage sans chrome tel que décrit aux exemples 3 et 4 du brevet EP-2.792.702B1. En particulier, le bain de satinage utilisé dans le présent exemple est le produit commercial ECOPOSIT™ CF-820 (Chrome-free Etch-CFE).

### B : Composition d'un plastisol selon l'invention.

Les concentrations indiquées ci-après pour la réalisation du plastisol sont exprimées en parties en poids de résine (pcr).

| | |
|---|---|
| SOLVIN 372 NF® (résine PVC) | 45 |
| SOLVIN 374 MB® (résine PVC) | 55 |
| DINP® (diisononylphtalate) (plastifiant) | 44,1 |
| DINA.Z® (adipate de diisononylphtalate) (plastifiant) | 6,10 |
| Triméthyl pentanediol diisobutyrate (plastifiant) | 2,50 |
| Silice pyrogénée (agent de charge) | 0,45 |
| Vanadate de bismuth (BiVO4) | 6 |
| Alcool benzylique (agent de réglage de la viscosité) | 2 |
| Antioxydant (dioctylthio dimethyl o -phenol | 2 |
| Stéarate d'octyle (agent de réglage de la viscosité) | 4 |
| BYK 3155® (dérivés de polyoxyalkylènes - agent de dégazage) | 0,2 |
| CALOXOL CPAO® (oxyde de calcium - absorbeur d'humidité) | 0,5 |
| MARKSTAB BZ530® (stabilisant thermique) | 2 |
| IRCOGEL 903® (sulfonate de calcium - agent de rhéologie) | 1,7 |

On comprend que ces valeurs sont données à titre d'exemple et qu'elles peuvent être modifiées en fonction des besoins.

### C : Revêtement d'un montage d'électrolyse par une couche de plastisol selon l'invention.

Le procédé de revêtement comporte les étapes suivantes :
a) Préparation de l'outillage : sablage, dégraissage à l'aide de vapeurs de trichloroéthylène, rinçage avec de l'eau et séchage.
b) Application au pistolet ou au trempé d'une sous-couche d'adhérence sur l'outillage suivie d'un séchage du revêtement pendant 15 minutes à la température ambiante.
c) Préchauffage de l'outillage dans une étuve à une température comprise entre 180°C et 200°C pendant 30 minutes.
d) Trempage de l'outillage chaud dans le bain de plastisol répondant à la composition ci-dessus ou du type de celui de l'exemple 5 du brevet EP-1.496.090.
e) L'outillage est égoutté lentement en le sortant dudit bain à une vitesse comprise entre 1 et 5 cm/minute, l'égouttement est important pour obtenir un revêtement fin et homogène sans coulure.
f) L'outillage est chauffé ensuite dans une étuve à 180°C pendant 45 minutes.

On obtient ainsi un montage d'électrolyse selon l'invention qui résiste bien à une métallisation même lors de l'utilisation de bains de satinage exempts de chrome, notamment à base d'ions manganèse.

### D : Essai de métallisation

Après satinage pendant 10 minutes à 65°C dans le bain ci-dessus des pièces portées par des outillages revêtus d'un plastisol de l'art antérieur (HEXAPLAST® Figure 1A) et selon l'invention (Figure 1B), les pièces sont d'abord soumises à une métallisation chimique classique comprenant les étapes suivantes :
a) Neutralisation par rinçage dans de l'eau dé-ionisée ;
b) Pré-trempage dans l'acide chlorydrique dilué (3N) pendant 30 secondes à 1 minute ;
c) Catalyse dans une solution de palladium colloïdal à 20/35°C pendant 1 à 3 minutes ;
d) Après rinçage dans l'eau dé-ionisée, immersion dans une solution d'accélération (Accelerator™ PM964 solution de Dow Chemical Company) à 40/55°C pendant 2 à 3 minutes ;
e) Après rinçage dans l'eau dé-ionisée, dépôt d'une couche de nickel chimique dans une solution de sel de nickel (NIPOSIT™ PM980 Electroless Nickel plating bath de Dow Chemical Company) à une température de 20/40°C pendant 5 à 15 minutes ;

Les pièces sont ensuite soumises à une métallisation électrolytique comprenant les étapes suivantes :
f) Après rinçage dans l'eau dé-ionisée, dépôt d'une couche de cuivre par voie électrolytique dans une solution de pyrophosphate de cuivre à une température de 20/40°C pendant 5 à 15 minutes et une densité de courant de 1A/dm²;
g) Dépôt électrolytique de cuivre par trempage dans une solution de cuivre acide à une température de 25/50°C pendant 20 à 45 minutes à une densité de courant de 3A/dm² environ ;
h) Après rinçage dans l'eau dé-ionisée, dépôt électrolytique de nickel par trempage dans une solution de nickel à une température de 25/50°C pendant 2 à 5 minutes à une densité de courant de 1A/dm².

Les photographies montrent clairement que les brins de support des pièces ainsi que la partie de l'outillage de la Figure 1A (art antérieur) immergés dans les bains de métallisation, sont métallisés, ce qui n'est pas le cas des brins ainsi que de la partie de l'outillage de la Figure 1B revêtus du plastisol selon l'invention immergés dans les bains de métallisation.

## Revendications

1. Outillage pour galvanoplastie limitant, voire empêchant une métallisation chimique du plastisol le recouvrant lors d'une opération de métallisation par galvanoplastie de pièces en matière plastique, le plastisol comprenant au moins une résine et un mélange plastifiant,
**caractérisé en ce que** le plastisol contient au moins un oxyde de bismuth et d'un élément du groupe V ou du groupe VI de la classification périodique des éléments (oxyde mixte de bismuth).

2. Outillage selon la revendication 1, **caractérisé en ce que** l'oxyde mixte de bismuth est choisi parmi les vanadates, molybdates, tungstates, niobates et antimonates de bismuth, et leurs mélanges.

3. Outillage selon la revendication 2, **caractérisé en ce que** l'oxyde mixte de bismuth est le vanadate de bismuth BiVO4.

4. Outillage selon l'une quelconque des revendications 1 à 3, **caractérisé en ce que** l'oxyde mixte de bismuth a une concentration, exprimée en parties pour cent en poids de résine (pcr) de 2,5 à 7,5, de préférence comprise de 4 à 6.

5. Outillage selon l'une quelconque des revendications 1 à 4, **caractérisé en ce que** le plastisol répond à la composition suivante, exprimée en parties en poids :
| | |
|---|---|
| Résine | 100 |
| Oxyde mixte de bismuth | 2,5 à 7,5 |
| Plastifiant | 45 à 60 |

6. Outillage selon l'une quelconque des revendications 1 à 5, **caractérisé en ce que** le plastisol comprend, en outre, un adjuvant choisi parmi les stabilisants, les agents de charge, les colorants, les agents gonflants, les émulsifiants, les agents d'ajustage de la viscosité, les agents de démoulage, les agents matants, les agents antistatiques, les agents antioxydants, les agents fongicides, les agents de dégazage, les stabilisants thermiques, les agents améliorant la tenue au feu et les mélanges de ceux-ci.

7. Outillage selon l'une quelconque des revendications 1 à 6, **caractérisé en ce que** l'oxyde mixte de bismuth est dispersé au sein du plastisol lors d'une étape d'empattage sous vide du plastisol.

8. Outillage selon l'une quelconque des revendications 1 à 7, **caractérisé en ce que** le plastisol comprend une résine de poly(chlorure de vinyle).

9. Outillage selon l'une quelconque des revendications 1 à 7, **caractérisé en ce que** le plastisol comprend une résine acrylique.

10. Utilisation de l'outillage selon l'une quelconque des revendications 1 à 9 pour la métallisation de pièces en matière plastique par galvanoplastie.

11. Utilisation selon la revendication 10, **caractérisée en ce qu'**elle comporte une opération de satinage qui comprend une étape de traitement des pièces en matière plastique dans un bain de satinage exempt de chrome.

12. Utilisation selon la revendication 11, **caractérisée en ce que** ledit bain comprend du permanganate ou des ions manganèse.

13. Utilisation selon l'une quelconque des revendications 10 à 12, **caractérisée en ce que** l'opération de métallisation comprend une étape de trempage dans un bain de catalyse comprenant du palladium colloïdal.

## Patentansprüche

1. Galvanisierwerkzeug, das eine chemische Metallisierung des dieses bedeckenden Plastisols bei einem Metallisierungsvorgang durch Galvanisation von Teilen aus einem Plastikmaterial begrenzt oder sogar verhindert, wobei das Plastisol wenigstens ein Harz und eine plastizierende Mischung aufweist,
**dadurch gekennzeichnet, daß** das Plastisol wenigstens ein Bismutoxid und ein Element der Gruppe V oder der Gruppe VI des Periodensystems der Elemente (gemischtes Bismutoxid) aufweist.

2. Werkzeug gemäß Anspruch 1, **dadurch gekennzeichnet, daß** das gemischte Bismutoxid aus den Bismutvanadaten, -molybdaten, -tungstaten, -niobaten und -antimonaten und deren Mischungen ausgewählt ist.

3. Werkzeug gemäß Anspruch 2, **dadurch gekennzeichnet, daß** das gemischte Bismutoxid das Bismutvanadat BiVO4 ist.

4. Werkzeug gemäß einem der Ansprüche 1 bis 3, **dadurch gekennzeichnet, daß** das gemischte Bismutoxid eine in Gewichtsprozenten von Harz (per) ausgedrückte Konzentration von 2,5 bis 7,5, vorzugsweise von 4 bis 6, aufweist.

5. Werkzeug gemäß einem der Ansprüche 1 bis 4, **dadurch gekennzeichnet, daß** das Plastisol die folgende in Gewichtsprozenten ausgedrückte Zusammensetzung aufweist:
| | |
|---|---|
| Harz | 100 |
| Gemischtes Bismutoxid | 2,5 bis 7,5, |
| Plastizierer | 45 bis 60 |

6. Werkzeug gemäß einem der Ansprüche 1 bis 5, **dadurch gekennzeichnet, daß** das Plastisol außerdem einen unter den Stabilisatoren, den Füllstoffen, den Farbstoffen, den Quellstoffen, den Emulsionsstoffen, den Viskositätseinstellstoffen, den Formtrennstoffen, den Mattierungsstoffen, den antistatischen Stoffen, den Antioxydantien, den pilztötenden Stoffen, den Entgasungsstoffen, den thermischen Stabilisatoren, den Stoffen zur Verbesserung der Feuerfestigkeit und deren Mischungen ausgewählten Zusatzstoff aufweist.

7. Werkzeug gemäß einem der Ansprüche 1 bis 6, **dadurch gekennzeichnet, daß** das gemischte Bismutoxid während eines Schrittes des Pastierens des Plastisols im Vakuum im Plastisol verteilt wird.

8. Werkzeug gemäß einem der Ansprüche 1 bis 7, **dadurch gekennzeichnet, daß** das Plastisol ein Polyvinylchloridharzdes Werkzeugs aufweist.

9. Werkzeug gemäß einem der Ansprüche 1 bis 7, **dadurch gekennzeichnet, daß** das Plastisol ein Akrylharz aufweist.

10. Verwendung des Werkzeugs gemäß einem der Ansprüche 1 bis 9 für die Metallisierung von Teilen aus einem Plastikmaterial durch Galvanisieren.

11. Verwendung gemäß Anspruch 10, **dadurch gekennzeichnet, daß** sie einen Schritt des Satinierens aufweist, der einen Schritt der Behandlung der Teile aus einem Plastikmaterial in einem chromfreien Satinierbad aufweist.

12. Verwendung gemäß Anspruch 11, **dadurch gekennzeichnet, daß** das Bad Permanganat oder Manganionen aufweist.

13. Verwendung gemäß einem der Ansprüche 10 bis 12, **dadurch gekennzeichnet, daß** der Schritt des Metallisierens einen Schritt des Eintauchens in ein kolloidales Palladium enthaltendes Katalysebad aufweist.

## Claims

1. An electroplating tool limiting, or even preventing a chemical metallization of the plastisol that covers it during an operation of metallization by electroplating of plastic parts, the plastisol comprising at least a resin and a plasticizer mixture,
**characterized in that** the plastisol contains at least a bismuth oxide and an element from group V or group VI of the periodic table of elements (mixed bismuth oxide).

2. The tool according to claim 1, **characterized in that** the mixed bismuth oxide is chosen among bismuth vanadates, molybdates, tungstates, niobates and antimonates, and mixtures thereof.

3. The tool according to claim 2, **characterized in that** the mixed bismuth oxide is the bismuth vanadate BiVO4.

4. The tool according to any one of claims 1 to 3, **characterized in that** the mixed bismuth oxide has a concentration, expressed in parts by weight per hundred resin (PHR), of 2.5 to 7.5, preferably from 4 to 6.

5. The tool according to any one of claims 1 to 4, **characterized in that** the plastisol responds to the following composition, expressed in parts by weight:
| | |
|---|---|
| Resin | 100 |
| Mixed bismuth oxide | 2.5 to 7.5 |
| Plasticizer | 45 to 60. |

6. The tool according to any one of claims 1 to 5, **characterized in that** the plastisol further comprises an adjuvant chosen among stabilizers, bulking agents, dyes, swelling agents, emulsifiers, viscosity adjusting agents, release agents, matting agents, antistatic agents, antioxidant agents, fungicidal agents, degassing agents, thermal stabilizers, agents improving fire resistance, and mixtures thereof.

7. The tool according to any one of claims 1 to 6, **characterized in that** the mixed bismuth oxide is dispersed into the plastisol, during a step of vacuum pasting of the plastisol.

8. The tool according to any one of claims 1 to 7, **characterized in that** the plastisol comprises a poly(vinyl chloride) resin.

9. The tool according to any one of claims 1 to 7, **characterized in that** the plastisol comprises an acrylic resin.

10. Use of the tool according to any one of claims 1 to 9 for metallizing plastic parts by electroplating.

11. The use according to claim 10, **characterized in that** it includes a satin-finishing operation that comprises a step of treating the plastic parts in a chromium-free satin-finishing bath.

12. The use according to claim 11, **characterized in that** said bath comprises permanganate or manganese ions.

13. The use according to any one of claims 10 to 12, **characterized in that** the metallization operation comprises a step of soaking into a catalysis bath comprising colloidal palladium.
